Europäisches Patentamt

European Patent Office

Office européen des brevets

(19)

(11) Veröffentlichungsnummer: **0 552 858 A1**

(12)

# EUROPÄISCHE PATENTANMELDUNG

(21) Anmeldenummer: **93250028.3**

(22) Anmeldetag: **21.01.93**

(51) Int. Cl.5: **F16F 1/06**, F16F 15/06

(30) Priorität: **23.01.92 DE 4201960**

(43) Veröffentlichungstag der Anmeldung:
**28.07.93 Patentblatt 93/30**

(84) Benannte Vertragsstaaten:
**DE FR GB IT**

(71) Anmelder: **GERB Gesellschaft für Isolierung mbH & Co. KG**
**Roedernallee 174-176**

**W-1000 Berlin 51(DE)**

(72) Erfinder: **Delam, Heinz**
**Blakenheideweg 3**
**W-1000 Berlin 20(DE)**

(74) Vertreter: **Christiansen, Henning, Dipl.-Ing.**
**Patentanwalt Pacelliallee 43/45**
**W-1000 Berlin 33 (DE)**

(54) **Federanordnung zur Herabsetzung von Körperschall.**

(57) Die Erfindung betrifft eine Federanordnung, insbesondere in Form einer Schraubenfeder, zur Schwingungsisolierung. Die Feder (1) weist zwecks gezielter Dämpfung von Schwingungen im hörbaren Körperschallbereich in Richtung ihrer Längsachse (8) eine Gliederung in eine Mehrzahl von einzelnen, im wesentlichen federnd bzw. schwingungsfähig ausgebildeten Abschnitten (6) auf, wobei die Federabschnitte (6) an ihren Endpunkten jeweils durch aus Federmaterial bestehende und im wesentlichen starre Kopplungselemente (7) derart unmittelbar verbunden angeordnet sind, daß die Eigenfrequenz der einzelnen Federabschnitte (6) größer ist als die Eigenfrequenz einer ungegliederten Schraubenfeder mit gleicher Anzahl federnder Windungen.

Fig. 1

EP 0 552 858 A1

Die Erfindung betrifft eine Federanordnung der im Oberbegriff des Anspruchs 1 angegebenen Art.

Das technische Gebiet "Schwingungsisolierung" kann grundsätzlich in zwei Bereiche unterteilt werden. Unter der Bezeichnung "Aktivisolierung" werden diejenigen Arbeitsbereiche der Schwingungsisolierung zusammengefaßt, bei denen es darum geht, Maschinen und Geräte, welche störende Schwingungen erzeugen, von der Umgebung "abzukoppeln", um diese vor der Schwingungsbeeinträchtigung zu schützen. Bei der "Passivisolierung" sind empfindliche Geräte durch Beeinträchtigung von außen zu schützen. In der Regel werden zwischen dem zu isolierenden Gerät und der Umgebung elastische Elemente vorgesehen, welche die Ausbreitung der Schwingung zu verhindern suchen. Dabei werden im gesamten Bereich der Schwingungsisolierung als Standardlösung Schraubenfedern eingesetzt, auf denen das zu isolierende stationäre Gebäude oder die Maschine bzw. das Gerät ruht. Ihre Vorteile gegenüber anderen elastischen Lagern sind der geringe Preis, ihre sehr gut reproduzierbaren Federeigenschaften, ihre hohe Wirksamkeit und die weitgehende Wartungsfreiheit sowie große Lebensdauer.

Stahlfedern zur Schwingungsisolierung haben sich im Bereich der normalen Maschinenschwingungen, bei denen die höchsten auftretenden Frequenzen bei etwa 50 Hz liegen, erfolgreich bewährt.

Sollen jedoch auch Frequenzen oberhalb 50 Hz, vorzugsweise Frequenzen im hörbaren Bereich (Körperschall), durch Schraubenfedern isoliert werden, tritt eine ungünstige Eigenschaft der zur Schwingungsisolierung eingesetzten Schraubenfedern störend in Erscheinung. Die Schraubenfedern wirken als schwingungsfähiges System mit im störenden Frequenzbereich liegender Eigenfrequenz. Durch die Resonanzerscheinungen mit den auf die Federn einwirkenden Maschinenschwingungen verschlechtert sich die Wirkung der Schwingungsisolierung beträchtlich. Hierbei sind auch die jeweiligen Oberwellen zu berücksichtigen.

Die erste Eigenfrequenz des schwingungsfähigen Federsystems ist nach DIN 2089 mit

$$f_e = \frac{3560\ d}{n \cdot D^2} \cdot \sqrt{G/\rho}$$

der Anzahl der federnden Windungen umgekehrt proportional, mit:
dem Durchmesser des Federdrahtes d,
dem mittleren Windungsdurchmesser D,
der Anzahl der federnden Windungen n,
dem Gleitmodul G und
der Dichte $\rho$.

Bei dieser und den höheren Eigenfrequenzen der Feder wird die Isolierwirkung erheblich verschlechtert, d.h. die betreffenden Schwingungen werden weitgehend ungedämpft übertragen und stellen eine störende Beeinträchtigung der Umgebung dar. Da die Anforderungen an die Schwingungsisolierung im Zusammenhang mit den steigenden Anforderungen des Umweltschutzes immer mehr zunehmen und damit insbesondere auch Frequenzen isoliert werden müssen, die im hörbaren Bereich liegen, mußten zusätzliche Maßnahmen entwickelt werden, welche die schwingungsunterdrückenden Eigenschaften der verwendeten Federn verbessern.

Aus der DE-PS 35 17 900 ist eine Lösung bekannt, mit welcher das Resonanzverhalten von Schraubenfedern beinflußt werden kann. Hier wird vorgeschlagen, die Schraubenfeder in geeigneter Weise mit einem Kunststoff zu beschichten, um die Geräuschentwicklung bei Einsatz der Federn zu reduzieren. Diese Lösung führt im Vergleich zu einer normalen Schraubenfeder zu einer beträchtlichen Anhebung der Herstellungskosten.

Es ist weiterhin bekannt, die zur Schwingungsisolierung eingesetzten Federn in mehrere, hintereinandergeschaltete Teilfedern unter Einfügung zwischengeschalteter Massen aufzuteilen. Aufgrund der jeweils verringerten Anzahl von federnden Windungen treten (entsprechend der obigen Formel) die niedrigsten Eigenfrequenzen der Teilfedern erst bei höheren Frequenzen auf, wo sie weniger störend in Erscheinung treten. Die Enden benachbarter Teilfedern werden jeweils über eine "Zwischenmasse" in Form eines Klotzes miteinander verbunden. Hierbei entsteht ein weiteres schwingungsfähiges System mit einer relativ tiefen Eigenfrequenz, die bei geeigneter Wahl der Masse vom Ohr nicht mehr wahrgenommen wird.

Hierbei ist es nachteilig, daß die Klötze entweder aufwendige zusätzliche Befestigungsmaßnahmen mit den benachbarten Federn erfordern oder aber bei losem Anliegen die Gefahr einer mangelnden Querstabilität besteht. Weiterhin sind die Fertigungskosten der aus Teilfedern bestehenden Federsysteme bei gleicher Tragkraft bedeutend höher als die für eine einzelne Feder. Eine Erhöhung der horizontalen Stabilität des Federsystems durch eine verbesserte Verbindungstechnik zwischen den einzelnen Teilfedern ist sehr aufwendig und führt zwangsläufig zu einer weiteren Erhöhung der Fertigungskosten. Zudem müssen auch jeweils die an den Klotz anschließende Federwindungen zur Anlage an den Klotz besonders geformt sein und stehen somit nicht für die Schwingungsdämpfung zur Verfügung.

Ausgehend von den Mängeln des Standes der Technik liegt der Erfindung die Aufgabe zugrunde, eine Federanordnung der eingangs genannten Gattung anzugeben, die eine große Isolierwirkung für Körperschall mit Frequenzen im Hörbereich besitzt, zusätzlich eine verbesserte Quersteifigkeit aufweist und gleichzeitig kostengünstiger hergestellt werden kann.

Diese Aufgabe wird mit den kennzeichnenden Merkmalen des Anspruchs 1 gelöst.

Der Erfindung beinhaltet die Erkenntnis, daß erhebliche Vorteile bei der Schwingungsisolierung im Körperschallbereich durch als Isolationselemente eingesetzte Schraubenfedern erreicht werden können, wenn die Eigenfrequenz der Schraubenfedern im Verhältnis zur Frequenz der zu isolierenden Schwingungen durch Zwischenmassen heraufgesetzt wird, welche selbst Teile der Federstruktur sind. Dadurch kann in günstiger Weise vermieden werden, daß es bei Anregung der Federanordnung im jeweiligen Einsatzfall zur Ausbildung störender Resonanzen kommt, bei der der Isolierwirkungsgrad bzw. die Durchgangsdämmung für den in Frage kommenden Frequenzbereich erheblich verringert wird.

Hierbei wird die entsprechende Schraubenfeder in Richtung ihrer Längsachse in eine Mehrzahl einzelner, schwingungsfähiger Federabschnitte unterteilt, wobei die einzelnen Federabschnitte jeweils durch aus Federmaterial gebildete, im wesentlichen starre Kopplungselemente verbunden sind und die Gesamtzahl der federnden Windungen der so gestalteten Federanordnung der Windungsanzahl der ungegliederten Schraubenfeder entspricht. Um bei Verbindung der einzelnen federnden Abschnitte den konstruktiven Aufwand erheblich zu senken, werden die Kopplungselemente durch eine Mehrzahl von blockierten Windungen aus dem Federmaterial gebildet, welches auch für die federnden Abschnitte verwendet worden ist. Die Blockierung tritt hierbei dadurch ein, daß die die Zwischenmasse bildenden Federwindungen, insbesondere unter Vorspannung, aneinander anliegen. Es kann so auf einfache Weise eine unmittelbare und sichere Verbindung zwischen den Einzelelementen der Federanordnung erreicht werden, ohne daß zusätzliche Bauteile erforderlich wären.

Das Anliegen der als Zwischenmasse dienenden Federwindungen kann entweder durch eine Fertigung dieser Federwindungen mit einer inneren Vorspannung gewährleistet werden oder bei vertikaler Belastung durch die Last selbst.

Die einzelnen Teilfedern der Federanordnung gehen dabei jeweils unter Bildung einer Übergangswindung mittlerer Steigung in die durch eng aneinander anliegende Windungen gebildeten Zwischenmassen über.

Die erfindungsgemäße Ausgestaltung der Federanordnung besitzt auch den besonderen Vorteil, daß die günstigen Eigenschaften einer Schraubenfeder hinsichtlich ihrer Querstabilität erhalten bleiben, da die einzelnen Teilfedern auch bei einer eine Kippbewegung erzeugenden Belastung nicht ihre mechanische Verbindung verlieren. Dadurch besitzt eine als System einzelner Teilfedern gestaltete Federanordnung im wesentlichen die für eine Schraubenfeder gleicher Länge zutreffenden Quersteifigkeitswerte.

Bei einer bevorzugten Weiterbildung der Erfindung ist aus den aneinanderliegenden Windungen der Feder gebildete Zwischenmasse m derart dimensioniert, daß die Eigenfrequenz des aus dieser Masse und den benachbarten Teilfedern gebildeten Systems ebenfalls nicht die Dämmungswirkung der Federanordnung herabsetzt.

Die Zwischenmasse m wird dabei beidseitig von Teilfedern $C_1$ und $C_2$ gestützt, so daß sich für diese Teilanordnung die Resonanzfrequenz mit

$$\omega_o = \sqrt{(C_1 + C_2)/m}$$

errechnet. Diese wird so gewählt, daß sie außerhalb des zu dämmenden Frequenzbereichs gelegen ist.

Nach einer bevorzugten Ausführungsform der Erfindung ist die Federanordnung in zwei, im wesentlichen gleichartig ausgebildete Teilfedern unterteilt. Die Eigenfrequenz der Einzelfedern ist dabei doppelt so groß wie die Eigenfrequenz einer einzelnen Schraubenfeder mit gleicher Anzahl federnder Windungen. Dabei entspricht die Gesamtzahl der federnden Windungen der so gestalteten Federanordnung der Windungsanzahl der ungegliederten Schraubenfeder. Die Anzahl der nicht federnden also zur Zwischenmasse gehörigen Windungen wird so gewählt, daß die Resonanzfrequenz des Gesamtsystems nach obengenannter Formel möglichst unterhalb des Hörbereichs liegt.

In anderen vorteilhaften Weiterbildungen der Erfindung ist die Federanordnung in mehr als zwei federnde Teilabschnitte untergliedert. Durch diese Maßnahme und durch die Variation der Anzahl der federnden Windungen der einzelnen Teilabschnitte ist es auf einfache Weise möglich, die Eigenfrequenzen der Federanordnung auch dann in Frequenzbereiche zu verlagern, die außerhalb des Frequenzbereichs liegen, in welchem die zu isolierenden Körperschallfrequenzen auftreten, wenn der zu dämmende Frequenzbereich relativ breit ist. Derartig gestaltete Federanordnungen sind an die unterschiedlichsten Einsatzbedingungen für die Isolierung von Maschinenschwingungen anpaßbar, wenn ein hoher Isolierwirkungsgrad bzw. eine hohe Durchgangsdämmung für Körperschall in einem weiten Frequenzbereich gefordert wird. In den menschlichen Hörbereich fallende Frequenzanteile können dabei soweit unterdrückt werden, daß sie nicht mehr störend wirken, so daß auch den gesteigerten Anforderungen des Umweltschutzes Rechnung getragen werden kann.

Die Trennwirkung der Kopplungselemente wird nach einer weiteren Ausführungsform der Erfindung zusätzlich verstärkt, indem die Bereiche mit blockierten Windungen mit einer Vorspannung gewickelt werden, die eine Druckwirkung auf der Windungen der Kopplungselemente ausübt und dadurch einen kompakten Masseklotz entstehen läßt. Diese Form der Federanordnung ist besonders günstig für Einsatzfälle, bei denen mit einer horizontalen Federbelastung zu rechnen ist.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Figur 1 eine erste bevorzugte Ausführungsform der Erfindung in schematisierter Darstellung in Seitenansicht,

Figuren 2 bis 6 schematisierte entsprechende Darstellungen weiterer vorteilhafter Ausführungen der Erfindung,

Figur 7 eine grafische Darstellung des Frequenzganges der erzielten Durchgangsdämpfung bei Anwendungen der Erfindung sowie

Figur 8 eine Anordnung bei der mehrere Schraubenfedern nach der Erfindung zu einer größeren Einheit zusammengefaßt sind.

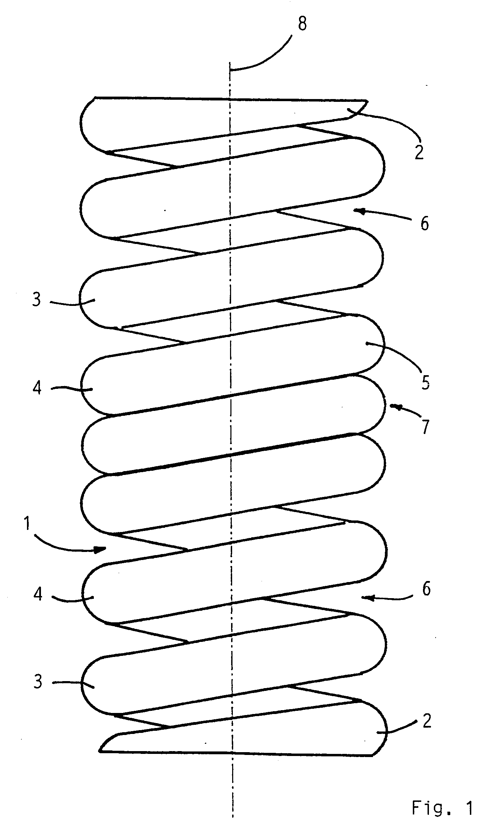

Die in Figur 1 dargestellte Federanordnung 1 besteht in Richtung ihrer Längsachse 8 aus zwei federnd ausgebildeten Abschnitten 6 und einer Zwischenmasse 7. Der Anschluß zwischen den die Teilfedern bildenden Abschnitten 6 und der Zwischenmasse 7 erfolgt jeweils mittels einer Übergangswindung 4, in deren Verlauf der Übergang von den federnden Windungen mit großer Steigung zu den eine geringe Steigung aufweisenden Windungen der Zwischenmassen erfolgt. Die Übergangswindung ist dabei so ausgestaltet, daß in möglichst kurzem Abstand nach der Zwischenmasse bereits eine Windung folgen kann, die den vollen Federhub ermöglicht.

Die Zwischenmasse 7 besteht aus mehreren, eng aneinanderliegenden und damit in ihrer Relativbewegung blockierten Windungen 5. Das derart erzeugte Element bildet die konstruktiv einfachste und zugleich sicherste mechanische Verbindung zwischen den Teilfedern 6, da der Verlauf der Feder nicht unterbrochen ist.

Die so erzeugte Federanordnung weist im Gegensatz zu einer einfachen Schraubenfeder gleicher Windungszahl eine höhere Eigenfrequenz auf. Die erhöhte Eigenfrequenz bewirkt, daß auch die Frequenzbereiche bei denen sich Resonanzen ausbilden können, bei denen die Durchgangsdämmung der Federanordnunggegen Null geht, heraufgesetzt sind. Damit kann die erfindungsgemäße Federanordnung auch erfolgreich für eine Schwingungsisolierung bei Maschinen und Anlagen eingesetzt werden, deren Betrieb mit einer erhöhten Körperschallabgabe in höheren Frequenzbereichen verbunden ist. Die durch die Zwischenmasse gleichzeitig erzeugte zusätzliche Resonanzfrequenz wird dabei auf eine so tiefe Frequenz festgelegt, daß sie vom Ohr nicht mehr wahrnehmbar ist. Diese Frequenz $\omega_o$ errechnet sich mit den Steifigkeiten $C_1$ und $C_2$ der Teilfedern sowie der Masse m der nicht federnden Windungen nach folgender Formel:

$$\omega_o = \sqrt{(C_1 + C_2)/m}$$

Zur Senkung der Herstellungskosten für die Federanordnung 1 trägt es bei, daß die Windungen der Teilfedern 6 und der Zwischenmasse 7 den gleichen Durchmesser aufweisen, da sie in einem einheitlichen Wickelvorgang aus üblichem Federstahl hergestellt werden können.

Die unmittelbare gegenseitige Anlage der benachbarten Teilwindungen wird durch eine bei der Herstellung erzeugte Vorspannung bewirkt. Bei Anwendungen mit vertikaler Belastung kann diese Vorspannung aber auch erst mit der Betriebslast aufgebracht werden.

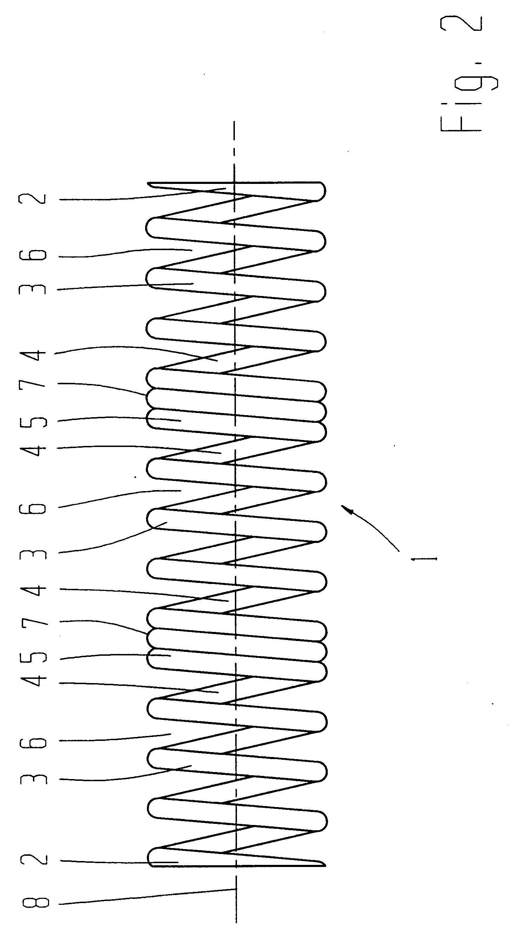

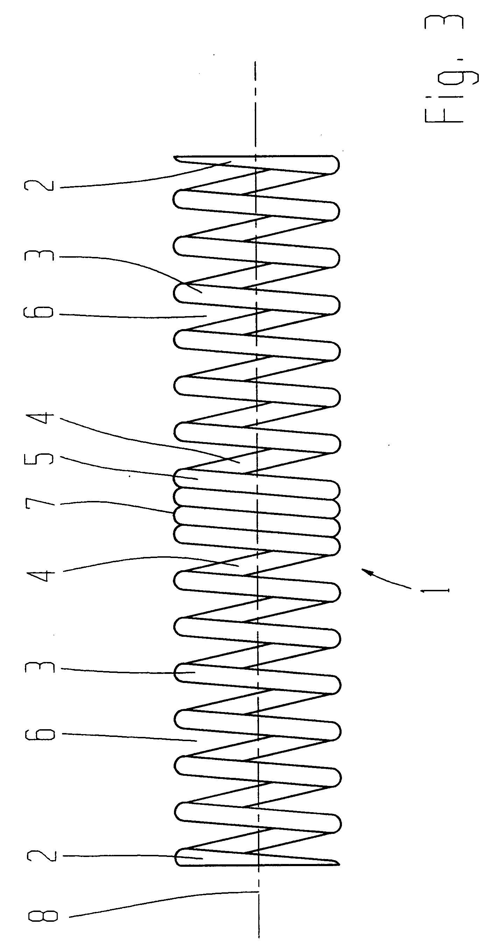

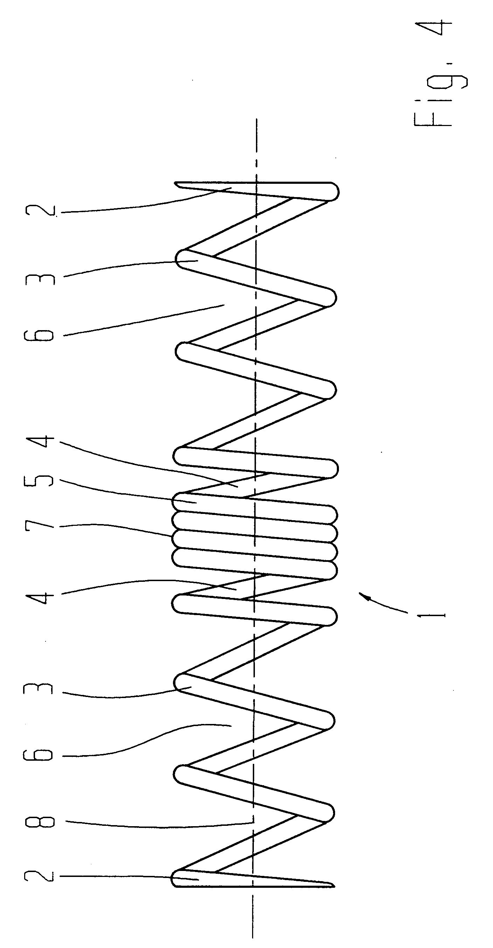

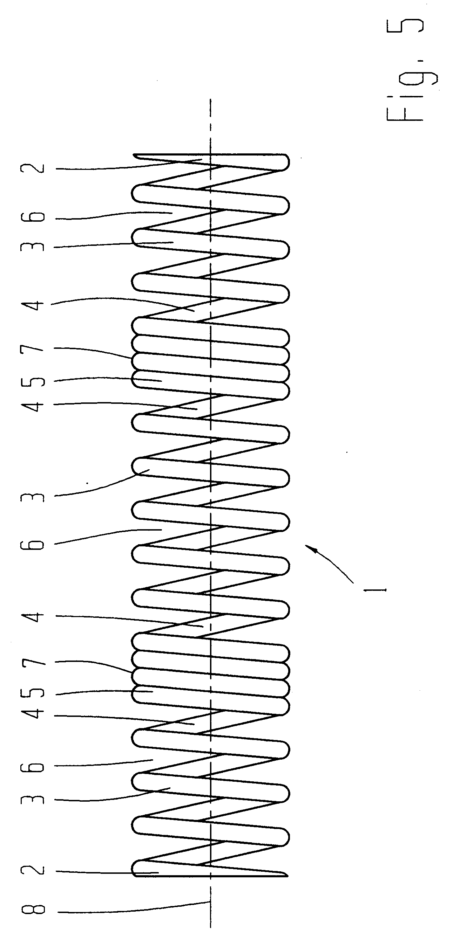

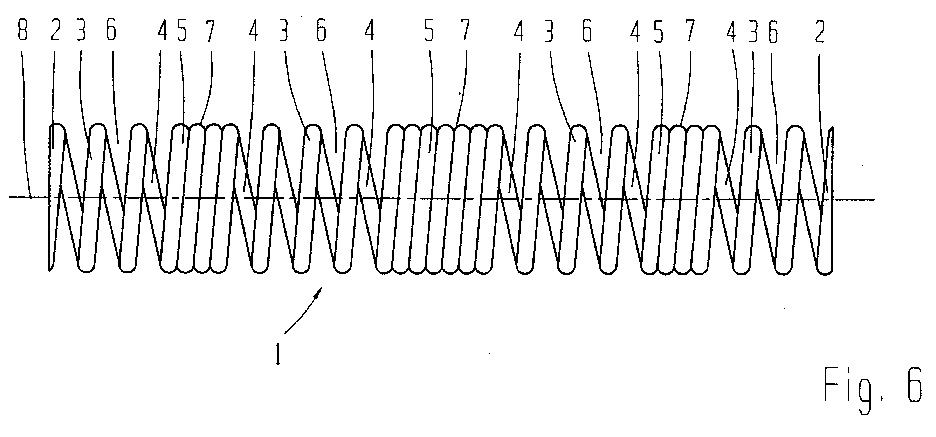

Die in Figur 1 dargestellte Grundausführung der Federanordnung 1 mit gleicher Anzahl von Windungen bei den Teilfedern 6 und der Zwischenmasse 7 ist in vielfältiger Form variierbar, um die Isolierwirkung derartiger Federelemente den verschiedenen Einsatzbedingungen anpassen zu können. Zur Anpassung der Eigenschaften der Federanordnung 1 sind insbesondere die Zahl der federnden Abschnitte 6, die Anzahl der federnden Windungen 3 der Teilfedern 6, die Anzahl der blockierten Windungen 5 der Zwischenmasse 7 und die Form der Übergangswindungen 4 variierbar. Mögliche Variationsformen der erfindungsgemäßen Federanordnung sind in den Figuren 2 bis 6 in schematisierter Darstellung gezeigt.

Die Federanordnung 1 besteht gemäß Figur 2 aus drei gleichartigen Teilfedern 6 und zwei ebenfalls gleichartig ausgebildeten Zwischenmassen 7. Die Teilfedern 6 und die Kopplungselemente 7 besitzen jeweils die gleiche Anzahl von Windungen. Die Eigenfrequenz der Teilfedern 6 der Federanordnung 1 ist dreimal so groß wie die Eigenfrequenz einer normalen Schraubenfeder mit gleicher Anzahl federnder Windungen.

Weitere definierte und im Verhältnis zur Eigenfrequenz einer einfachen Schraubenfeder mit gleicher Länge höhere Eigenfrequenzen der Federanordnung 1 können erreicht werden, wenn Anzahl der Teilfedern 6 und die Windungszahlen der Teilfedern 6 und der erforderlichen Zwischenmassee 7 variiert werden.

Die Figuren 2 bis 6 zeigen (unter Verwendung übereinstimmender Bezugszeichen) weitere Ausführungsformen der erfindungsgemäßen Federanordnung, welche zeigen, daß durch Variation der Anzahl der die Zwischenmasse bildenden Federwindungen, der Anzahl der Zwischenelemente und der Anzahl der Federwindungen zwischen den Federelementen, deren Steigung und durch unterschiedliche Wahl des Durchmessers des Federmaterials eine große Zahl von unterschiedlichen Ausführungsformen erzeugbar ist, welche für die verschiedensten Anwendungsfälle geeignet ist. Im Gegensatz zur Verwendung fester Zwischenmassen in Form von Blöcken entfällt dabei die Herstellung und Bevorratung mit unterschiedlichen Massenkörpern, die jeweils gegebenenfalls auch noch jeweils unterschiedliche Verbindungselemente zum Anschluß an die benachbarten Federwindungen erhalten müßten.

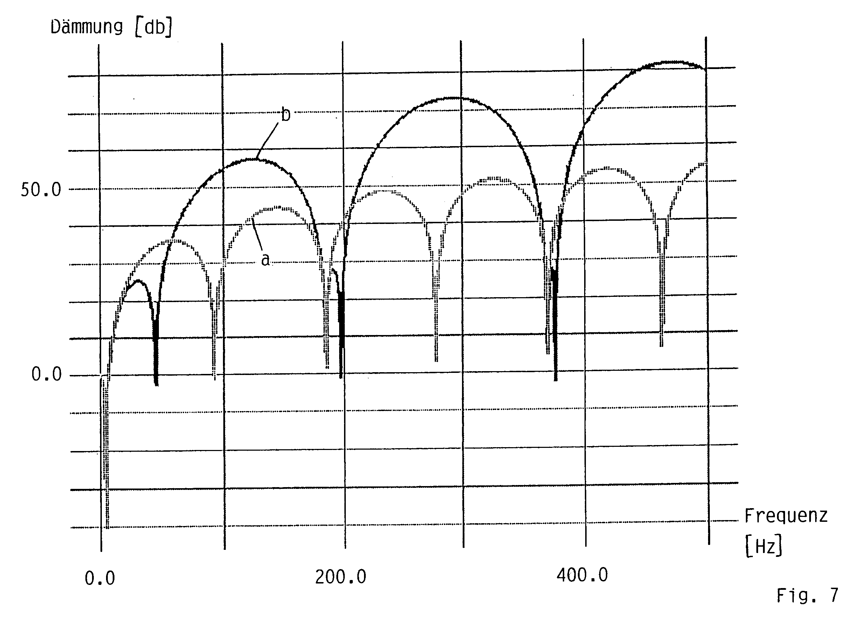

In Figur 7 ist das typische Schwingungsverhalten einer normalen Schraubenfeder aus Stahl (Kurvenverlauf a in Figur 7) im Vergleich zu der in Figur 1 dargestellten Ausführungsart einer Federanordnung mit gleicher Anzahl federnder Windungen (Kurvenverlauf b in Figur 7) als Frequenzgang der Durchgangsdämmung der jeweiligen Feder dargestellt. Im untersuchten Frequenzbereich von Null bis 500 Hz besitzt die normale Schraubenfeder eine Eigenfrequenz von etwa 95 Hz. Die entsprechenden Harmonischen der Eigenfrequenz liegen bei etwa 190, 285, 370 bzw. 465 Hz. Die Eigenfrequenz einer Federanordnung in der gemäß Figur 1 dargestellten Ausführungsform beträgt etwa 195 Hz, die entsprechende erste Harmonische liegt bei einer Frequenz von etwa 380 Hz.

Diese Frequenzwerte stimmen im wesentlichen mit Werten der ersten und dritten Harmonischen der Eigenfrequenz der zur Vergleichsmessung benutzten Schraubenfeder gleicher Länge überein. Das Auftreten geringer Frequenzabweichungen sowie die Resonanzstelle im Bereich von etwa 40 Hz sind auf die Wirkung der Masse des Zwischenmasses zwischen den federnden Abschnitten der Federanordnung zurückzuführen. Der wesentliche Vorteil der Federanordnung mit zwei voneinander getrennten federnden Abschnitten besteht im Vergleich zu einer normalen Schraubenfeder gleicher Länge darin, daß sich die Resonanzstellen zu höheren Frequenzwerten (bei gleichzeitiger Vergrößerung der relativen Frequenzabstände der Resonanzpunkte) verschieben. Dadurch verringert sich die Anzahl der Resonanzstellen in dem betrachteten Frequenzbereich bei gleichzeitiger Erhöhung der Durchgangsdämmung. Durch gezielte Wahl der Windungszahlen der Teilfedern, der Zwischenmasse und deren Anzahl sowie ihre Kombination mit bestimmten Kennwerten der zur Herstellung der Federanordnungen benutzten Materialien kann der Frequenzgang der Federanordnung an das Frequenzspektrum des Körperschalls bei einem beliebigen Einsatzfall in weiten Grenzen problemlos angeglichen werden.

Neben der vorteilhaften Anpassungsmöglichkeit des Frequenzganges der Durchgangsdämmung und der damit verbundenen Verbesserung des Isoliervermögens lassen sich die erfindungsgemäßen Federanordnungen aus einem zusammenhängenden Federmaterial kostengünstig herstellen. Aufgrund der Verwendung formstabiler Zwischenmasse besitzen die Federanordnungen darüberhinaus eine definierte Quersteifigkeit und können im Einsatzfall auf vorteilhafte Weise auch stärkeren Horizontalkräften ausgesetzt werden.

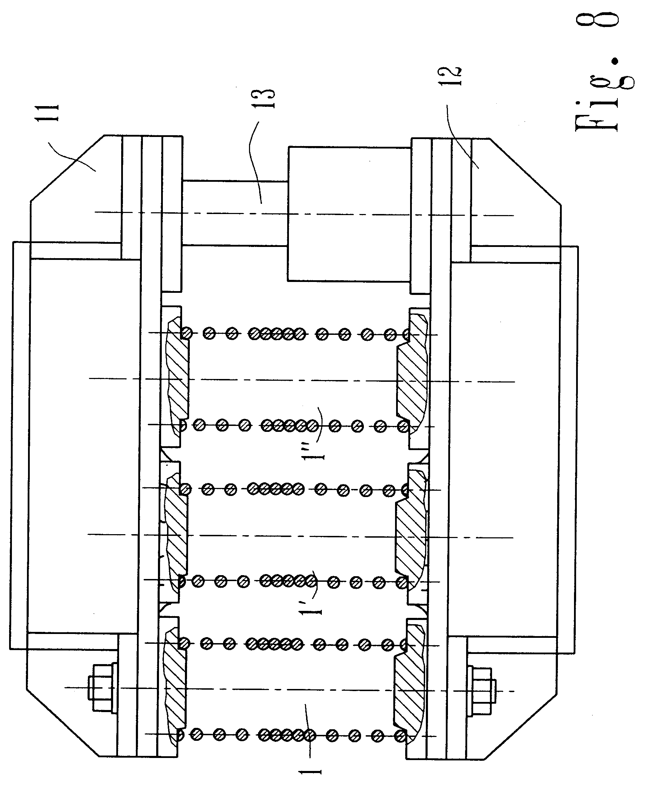

Bei der in Figur 8 dargestellten Anordnung sind mehrere Schraubenfedern 1 bis 1'' parallel mit zwei Schalen 11 und 12 zu einer Funktionseinheit zusammengefaßt. Zusätzlich ist noch ein Dämpfer 13 vorgesehen. Die Verbindung der Schraubenfedern mit den Schalen kann dabei durch Verschrauben (Feder 1) oder durch Verschweißen (Feder 1') und gegebenenfalls auch durch Verkleben (Feder 1'') erfolgen.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

## Patentansprüche

1. Federanordnung zur Herabsetzung von Körperschall und zur Schwingungsisolierung mit einer Schraubenfeder, die durch mindestens eine in die Feder eingefügte Zwischenmasse zur Heraufsetzung der

EP 0 552 858 A1

Eigenfrequenz in Richtung ihrer Längsachse in mehrere Federabschnitte gegliedert ist,
**dadurch gekennzeichnet,**
daß die Zwischenmasse aus einer Anzahl dicht aneinander anliegender Windungen (5) in Form eines Windungsblocks (7) besteht, welche unmittelbar in die daran anschließenden, als Federelemente wirksamen Federabschnitte (6) mit Windungen (3) von größerer Steigung übergehen.

2. Federanordnung nach Anspruch 1, **dadurch gekennzeichnet,** daß die einzelnen Windungen (5) eines Windungsblocks (7) eine Vorspannung aufweisen, welche die Windungen in axialer Richtung der Feder aufeinander preßt, wobei die Vorspannung bei der Herstellung und/oder durch eine im Betrieb auftretende Vorlast erzeugt wird.

3. Federanordnung nach Anspruch 1, **dadurch gekennzeichnet,** daß die Windungen (5) der Windungsblöcke (7) und der durch sie verbundenen Federabschnitte (6) einen im wesentlichen gleichen Durchmesser aufweisen.

4. Federanordnung nach Anspruch 1, **dadurch gekennzeichnet,** daß die Feder (1) aus Stahl besteht.

5. Federanordnung nach Anspruch 1, **dadurch gekennzeichnet,** daß die Anzahl der Windungen (3) der Federabschnitte (6) im wesentlichen der Anzahl der Windungen (5) der Windungsblöcke (7) entspricht.

6. Federanordnung nach Anspruch 1, **dadurch gekennzeichnet,** daß die Federabschnitte (6) bei konstanter Windungszahl der Windungsblöcke (7) unterschiedliche Anzahlen von Windungen (3) aufweisen.

7. Federanordnung nach einem der vorangehenden Ansprüche, **dadurch gekennzeichnet,** daß die Windungsblöcke (7) mindestens drei Windungen (5) enthalten.

8. Federanordnung nach einem der vorangehenden Ansprüche, **dadurch gekennzeichnet,** daß die Resonanzfrequenz errechnet aus den Federkonstanten der an dem Windungsblock (7) benachbarten Teilfedern und der Masse des Windungsblocks größer oder gleich ist als die sich unter Berücksichtigung des Windungsblocks ergebende Eigenfrequenz der Feder.

9. Federanordnung nach einem der vorangehenden Ansprüche, **dadurch gekennzeichnet,** daß der Bereich der Änderung der Steigung zwischen einer den Federabschnitt bildenden Windung und einer Windung des Windungsblocks im Bereich einer Übergangswindung sich über eine Länge erstreckt, die kürzer ist als eine - insbesondere eine halbe - Federwindung.

10. Schraubendruckfederanordnung nach einem der vorangehenden Ansprüche, **dadurch gekennzeichnet,** daß mehrere Federn (1,1',1'') und gegebenenfalls auch mindestens ein Dämpfer (13) in gemeinsamen Schalen (11, 12) zusammengefaßt sind.

Fig. 1

Fig. 2

EP 0 552 858 A1

Fig. 3

EP 0 552 858 A1

Fig. 4

EP 0 552 858 A1

EP 0 552 858 A1

Fig. 5

Fig. 6

Fig. 7

EP 0 552 858 A1

Fig. 8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | PATENT ABSTRACTS OF JAPAN vol. 004, no. 114 (M-026)15. August 1980 & JP-A-55 072 931 ( NHK SPRING ) 2. Juni 1980 * Zusammenfassung * | 1-5 | F16F1/06 F16F15/06 |
| Y |  | 10 |  |
|  | --- |  |  |
| Y | DE-A-3 213 031 (GERB GESELLSCHAFT FÜR ISOLIERUNG) * Seite 8, Absatz 4; Abbildung 3 * | 10 |  |
|  | --- |  |  |
| A | US-A-2 643 109 (WOOD) * Spalte 4, Zeile 5 - Zeile 57; Abbildungen 1-3 * | 1-4,6,7, 9 |  |
|  | --- |  |  |
| A | US-A-3 058 705 (HAGG) * das ganze Dokument * | 1-5,7 |  |
|  | ----- |  |  |

RECHERCHIERTE SACHGEBIETE (Int. Cl.5 )

F16F

Der vorliegende Recherchenhericht wurde für alle Patentansprüche erstellt

| Recherchenort | Abschlußdatum der Recherche | Prüfer |
|---|---|---|
| DEN HAAG | 10 MAI 1993 | R. BECKER |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
...........................................................................................
& : Mitglied der gleichen Patentfamilie, übereinstimmendes Dokument

EPO FORM 1503 03.82 (P0403)